# EUROPÄISCHE PATENTSCHRIFT

(11) **EP 4 286 145 B1**
(45) Veröffentlichungstag und Bekanntmachung des Hinweises auf die Patenterteilung: **15.01.2025**
(21) Anmeldenummer: 23171459.3
(22) Anmeldetag: 04.05.2023
(51) Int. Cl.: B29D 30/00, B29D 30/30, B29C 31/00, B65G 43/00

(54) **VERFAHREN ZUR HERSTELLUNG EINES FAHRZEUGREIFENS**
METHOD FOR PRODUCING A VEHICLE TYRE
PROCÉDÉ DE FABRICATION D'UN PNEU DE VÉHICULE

(30) Priorität: 02.06.2022 DE 102022205653
(43) Veröffentlichungstag der Anmeldung: 06.12.2023
(73) Patentinhaber: Continental Reifen Deutschland GmbH, 30175 Hannover (DE)
(72) Erfinder: Stiers, Christian, 30165 Hannover (DE)
(74) Vertreter: Continental Corporation

(56) Entgegenhaltungen:
- EP-A1- 3 141 382
- EP-A1- 3 552 811
- WO-A1-2016/103078
- DE-B- 1 015 214
- DE-U1- 202012 008 090

## Beschreibung

Die Erfindung betrifft ein Verfahren zur Herstellung eines Fahrzeugreifens.

Es ist bekannt, dass bei der Herstellung von Fahrzeugreifen mit Reifenaufbautrommeln Fördervorrichtungen eingesetzt werden, mit denen Reifenbauteile auf eine Reifenbautrommel aufgelegt werden. Im Normalfall werden diese Fördervorrichtungen mit so genannten Endlosförderbändern betrieben. Ein Beispiel für eine derartige Fördervorrichtung ist in der Patentanmeldeschrift EP 3552811 A1 offenbart.

Der Einsatz von geteilten Förderbändern mit einer Verbindungsstelle hat Nachteile, weil das Probleme beim Auflegen vom Reifenbauteil auf das Förderband mit sich bringen kann. Außerdem ist der Austausch Endlosförderbändern mit einem hohen Zeit- und Arbeitsaufwand verbunden.

Der Erfindung liegt die Aufgabe zugrunde, ein Verfahren bereitzustellen, mit dem der Einsatz von Fördervorrichtungen bei der Herstellung von Fahrzeugreifen verbessert wird.

Gelöst wird die Aufgabe gemäß Anspruch 1 dadurch, dass ein Verfahren mit folgenden Schritten eingesetzt wird:
a) Bereitstellen eines vorkonfektionierten Reifenbauteiles,
b) Bereitstellen einer Fördervorrichtung mit einem Förderband,
   wobei das Förderband mit einem Verbindungsmittel an einer Verbindungsstelle ein geschlossenes Band bildet,
c) Detektieren der Verbindungsstelle am Förderband,
d) Drehen des Förderbandes in eine Förderposition bei der das Reifenbauteil dergestallt auf das Förderband aufgebracht werden kann, so dass das Reifenbauteil nicht mit der Verbindungsstelle am Förderband in Kontakt tritt,
e) Zuführen des Reifenbauteiles auf die Fördervorrichtung,
   wobei das Reifenbauteil auf einen Teilbereich des Förderbandes aufgelegt wird, welches nicht die Verbindungsstelle am Förderband kontaktiert,
f) Zuführen des Reifenbauteiles mit der Fördervorrichtung auf eine Reifenbautrommel,
g) Fertigstellen des Fahrzeugreifens mit weiteren Schritten.

Ein Vorteil der Erfindung ist insbesondere darin zu sehen, dass durch das Verfahren der Einsatz von Fördervorrichtungen bei der Herstellung von Fahrzeugreifen wesentlich verbessert und vereinfacht wird. Mit dem neuen Verfahren können jetzt auch Fördervorrichtungen mit einem geteilten Förderband zum Einsatz kommen. Der Austausch von geteilten Förderbändern mit einer Verbindungsstelle lässt sich wesentlich einfacher vollziehen, als das mit einem Endlosförderband der Fall ist. Dadurch werden u.a. Wartungskosten gespart und die Verfügbarkeit der Reifenherstellungsanlage wesentlich erhöht.

Das neue Verfahren zeichnet sich insbesondere dadurch aus, dass das Reifenbauteil beim Auflegen auf die Fördervorrichtung nicht mit der Verbindungsstelle am Förderband in Kontakt treten kann. Mit dem Sensor und der Steuerung der Fördervorrichtung wird das Förderband immer so positioniert, dass das Reifenbauteil kontaktlos zur Verbindungsstelle am Förderband aufgelegt werden kann. Bei der Verbindungsstelle am Förderband handelt es sich in der Regel um eine Ausbeulung am Förderband, die die Genauigkeit beim Auflegen des Reifenbauteiles auf die Fördervorrichtung beeinträchtigen kann. Außerdem wird mit dem neuen Verfahren eine voll automatisierte Ausrichtung des Förderbandes ermöglicht.

In einer vorteilhaften Weiterbildung der Erfindung ist vorgesehen, dass der Sensor einen Metalldetektor zum Ermitteln der Verbindungsstelle umfasst.

Mit dem Metalldetektor lässt sich die Verbindungsstelle am Förderband einfach und schnell detektieren.

In einer weiteren vorteilhaften Weiterbildung der Erfindung ist vorgesehen, dass das Verbindungsmittel am Förderband ein Metall umfasst.

Beispielsweise könnte die Verbindungsstelle mit einem Metallplättchen versehen werden, welches durch den Metalldetektor erkannt werden kann.

In einer weiteren vorteilhaften Weiterbildung der Erfindung ist vorgesehen, dass das Verbindungsmittel am Förderband in Form von Metallklammern ausgebildet ist.

Mit den Metallklammern lässt sich eine hochfeste Verbindung für das geteilte Förderband erzielen.

In einer weiteren vorteilhaften Weiterbildung der Erfindung ist vorgesehen, dass der Sensor einen optischen Sensor zum Ermitteln der Verbindungsstelle umfasst. Mit einem optischen Sensor lässt sich die Verbindungsstelle einfach und mit einer hohen Genauigkeit identifizieren. Der optische Sensor könnte beispielsweise in Form einer Lichtschranke ausgebildet sein, wobei sich an der Verbindungsstelle eine Öffnung befindet, die lichtdurchlässig ist.

In einer weiteren vorteilhaften Weiterbildung der Erfindung ist vorgesehen, dass mindestens eine Rolle der Fördervorrichtung mit einem Servomotor angetrieben wird,
wobei mit dem Servomotor die relative Position der Verbindungsstelle vom Förderband gesteuert und/oder geregelt wird.

Dadurch kann das Förderband der Fördervorrichtung voll automatisiert in die richtige Position gebracht werden.

In einer weiteren vorteilhaften Weiterbildung der Erfindung ist vorgesehen, dass das Verbindungsmittel am Förderband in Form einer wieder lösbaren Verbindung ausgebildet ist.

Dadurch kann das Förderband auf einfache Weise an der Verbindungsstelle wieder geöffnet werden. Das Öffnen des Förderbandes kann beispielsweise bei Wartungsarbeiten hilfreich sein.

Anhand von Ausführungsbeispielen soll die Erfindung näher erläutert werden. Es zeigt:

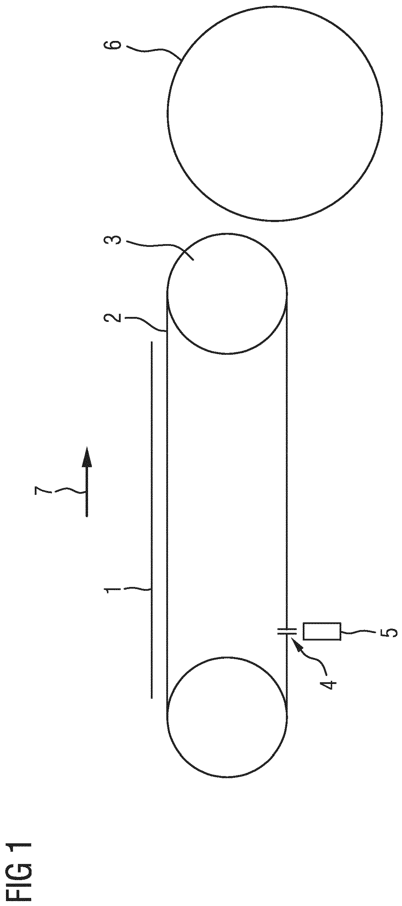

Fig. 1: Die Fördervorrichtung in einer Seitenansicht.

Die Figur 1 zeigt die Fördervorrichtung mit der Reifentrommel 6 in einer Seitenansicht. Die Fördervorrichtung umfasst insbesondere das geteilte Förderband 2 mit der Verbindungsstelle 4. Das Förderband 2 wird mit zwei Rollen 3 in der Materialflussrichtung 7 angetrieben. Nachdem die Fördervorrichtung mit dem geteilten Förderband 2 ausgestattet worden ist, kann mit einem Sensor 5 die Verbindungsstelle 4 am Förderband 2 detektiert werden. Der Sensor 5 umfasst beispielsweise einen Metalldetektor, mit dem ein Metall in der Verbindungsstelle detektiert wird. Bei dem Metall kann es sich beispielsweise um ein Metallplättchen handeln, welches an der Verbindungsstelle 4 angeordnet wird. Es ist ebenfalls denkbar, dass die Verbindungsstelle 4 Metallklammern aufweist, die die Enden des geteilten Förderbandes 2 miteinander verbinden. Bei diesem Ausführungsbeispiel wäre es nicht mehr notwendig, die Verbindungsstelle mit einem zusätzlichen Metallplättchen zu versehen. Das Förderband 2 wird über Servomotoren, die die Rollen 3 antreiben, so positioniert, dass das aufzulegende Reifenbauteil 1 nicht in Kontakt mit der Verbindungsstelle 4 tritt.

Die Figur zeigt, dass das Reifenbauteil 1 auf der Oberseite des Förderbandes 2 liegt und anschließende zur schematisch dargestellten Reifenbautrommel 6 gefördert wird. Die Verbindungsstelle 4 am Förderband 2 befindet sich auf der gegenüberliegenden unteren Seite der Fördervorrichtung. Mit der Fördervorrichtung und dem drehenden Förderband 2 wird das Reifenbauteil auf die schematisch dargestellte Reifenbautrommel 6 aufgelegt. Bei dem Reifenbauteil kann es sich beispielsweise um eine Karkasseinlage, um einen Reifeninnenliner oder um Wulstverstärker handeln, mit denen ein Fahrzeugreifen in Verbindung mit einer Reifenbautrommel hergestellt wird.

### Bezugszeichenliste

### (ist Teil der Beschreibung)

- 1: Reifenbauteil (z.B. Karkasseinlage)
- 2: Geteiltes Förderband
- 3: Rolle der Fördervorrichtung
- 4: Verbindungsstelle vom Förderband
- 5: Sensor
- 6: Reifenbautrommel
- 7: Materialflussrichtung vom Reifenbauteil

## Patentansprüche

1. Verfahren zur Herstellung eines Fahrzeugreifens mit folgenden Schritten:
a) Bereitstellen eines vorkonfektionierten Reifenbauteiles (1),
b) Bereitstellen einer Fördervorrichtung mit einem Förderband (2),
wobei das Förderband (2) mit einem Verbindungsmittel an einer Verbindungsstelle (4) ein geschlossenes Band bildet,
c) Detektieren der Verbindungsstelle (4) am Förderband (2),
d) Drehen des Förderbandes (2) in eine Förderposition bei der das Reifenbauteil (1) dergestallt auf das Förderband (2) aufgebracht werden kann, so dass das Reifenbauteil (1) nicht mit der Verbindungsstelle (4) am Förderband (2) in Kontakt tritt,
e) Zuführen des Reifenbauteiles (1) auf die Fördervorrichtung,
wobei das Reifenbauteil (2) auf einen Teilbereich des Förderbandes (2) aufgelegt wird, welches nicht die Verbindungsstelle (4) am Förderband (2) kontaktiert,
f) Zuführen des Reifenbauteiles (1) mit der Fördervorrichtung auf eine Reifenbautrommel (6),
g) Fertigstellen des Fahrzeugreifens mit weiteren Schritten.

2. Verfahren nach Anspruch 1,
**dadurch gekennzeichnet, dass**
das Detektieren der Verbindungsstelle (4) am Förderband (2) mit einem Sensor erfolgt, wobei der Sensor (5) einen Metalldetektor zum Ermitteln der Verbindungsstelle (4) umfasst.

3. Verfahren nach einem der vorhergehenden Ansprüche,
**dadurch gekennzeichnet, dass**
das Verbindungsmittel (4) am Förderband ein Metall umfasst.

4. Verfahren nach einem der vorhergehenden Ansprüche,
**dadurch gekennzeichnet, dass**
das Verbindungsmittel (4) am Förderband in Form von Metallklammern ausgebildet ist.

5. Verfahren nach einem der vorhergehenden Ansprüche,
**dadurch gekennzeichnet, dass**
der Sensor (5) einen optischen Sensor zum Ermitteln der Verbindungsstelle (4) umfasst.

6. Verfahren nach einem der vorhergehenden Ansprüche,
**dadurch gekennzeichnet, dass**
mindestens eine Rolle (3) der Fördervorrichtung mit einem Servomotor angetrieben wird,
wobei mit dem Servomotor die relative Position der Verbindungsstelle (4) vom Förderband (2) gesteuert und/oder geregelt wird.

7. Verfahren nach einem der vorhergehenden Ansprüche,
**dadurch gekennzeichnet, dass**
das Verbindungsmittel (4) am Förderband (2) in Form einer wieder lösbaren Verbindung ausgebildet ist.

## Claims

1. Method for producing a vehicle tyre by the following steps:
a) providing a prefabricated tyre component (1),
b) providing a conveying device comprising a conveying belt (2), the conveying belt (2) forming a closed loop with a connecting means at a connecting point (4),
c) detecting the connecting point (4) on the conveying belt (2),
d) turning the conveying belt (2) into a conveying position at which the tyre component (1) can be applied to the conveying belt (2) in such a way that the tyre component (1) does not come into contact with the connecting point (4) on the conveying belt (2),
e) feeding the tyre component (1) onto the conveying device, the tyre component (2) being placed onto a subregion of the conveying belt (2) that is not in contact with the connecting point (4) on the conveying belt (2),
f) feeding the tyre component (1) by the conveying device onto a tyre building drum (6),
g) completing the vehicle tyre by further steps.

2. Method according to Claim 1,
**characterized in that**
the connection point (4) on the conveyor belt (2) is detected by a sensor, the sensor (5) comprising a metal detector for determining the connecting point (4).

3. Method according to one of the preceding claims,
**characterized in that**
the connecting means (4) on the conveying belt comprises a metal.

4. Method according to one of the preceding claims,
**characterized in that**
the connecting means (4) on the conveying belt takes the form of metal clips.

5. Method according to one of the preceding claims,
**characterized in that**
the sensor (5) comprises an optical sensor for determining the connecting point (4).

6. Method according to one of the preceding claims,
**characterized in that**
at least one roller (3) of the conveying device is driven by a servo motor,
the relative position of the connecting point (4) of the conveying belt (2) being controlled and/or regulated by the servo motor.

7. Method according to one of the preceding claims,
**characterized in that**
the connecting means (4) on the conveying belt (2) takes the form of a releasable connection.

## Revendications

1. Procédé de fabrication d'un pneu de véhicule, comprenant les étapes suivantes consistant à :
a) fournir un composant de pneu (1) préconfectionné,
b) fournir un dispositif de transport avec une bande transporteuse (2), la bande transporteuse (2) formant une bande fermée avec un moyen de jonction en un point de jonction (4),
c) détecter le point de jonction (4) sur la bande transporteuse (2),
d) faire tourner la bande transporteuse (2) dans une position de transport dans laquelle le composant de pneu (1) peut être placé sur la bande transporteuse (2) de telle sorte que le composant de pneu (1) n'entre pas en contact avec le point de jonction (4) sur la bande transporteuse (2),
e) amener le composant de pneu (1) sur le dispositif de transport, le composant de pneu (2) étant posé sur une zone partielle de la bande transporteuse (2) qui n'entre pas en contact avec le point de jonction (4) sur la bande transporteuse (2),
f) amener le composant de pneu (1) par le dispositif de transport sur un tambour de confection de pneu (6),
g) finaliser le pneu de véhicule avec d'autres étapes.

2. Procédé selon la revendication 1,
**caractérisé en ce que**
la détection du point de jonction (4) sur la bande transporteuse (2) est effectuée à l'aide d'un capteur, le capteur (5) comprenant un détecteur de métal pour déterminer le point de jonction (4).

3. Procédé selon l'une quelconque des revendications précédentes, **caractérisé en ce que**
le moyen de jonction (4) sur la bande transporteuse comprend un métal.

4. Procédé selon l'une quelconque des revendications précédentes, **caractérisé en ce que**
le moyen de jonction (4) sur la bande transporteuse est réalisé sous la forme d'agrafes métalliques.

5. Procédé selon l'une quelconque des revendications précédentes, **caractérisé en ce que**
le capteur (5) comprend un capteur optique pour déterminer le point de jonction (4).

6. Procédé selon l'une quelconque des revendications précédentes, **caractérisé en ce que**
au moins un rouleau (3) du dispositif de transport est entraîné par un servomoteur, dans lequel le servomoteur permet de commander et/ou de réguler la position relative du point de jonction (4) par rapport à la bande transporteuse (2).

7. Procédé selon l'une quelconque des revendications précédentes, **caractérisé en ce que**
le moyen de jonction (4) sur la bande transporteuse (2) est réalisé sous la forme d'une jonction redétachable.
